# EUROPÄISCHE PATENTSCHRIFT

(11) **EP 2 485 002 B1**
(45) Veröffentlichungstag und Bekanntmachung des Hinweises auf die Patenterteilung: **09.10.2019**
(21) Anmeldenummer: 12154567.7
(22) Anmeldetag: 08.02.2012
(51) Int. Cl.: F02M 26/24, F28F 9/26, F28D 9/00

(54) **Wärmeübertrager**
Heat exchanger
Echangeur de chaleur

(30) Priorität: 31.03.2011 DE 102011015671; 08.02.2011 DE 102011003802
(43) Veröffentlichungstag der Anmeldung: 08.08.2012
(73) Patentinhaber: MAHLE Behr GmbH & Co. KG, 70469 Stuttgart (DE)
(72) Erfinder: Irmler, Klaus, 72072 Tübingen (DE); Schmidt, Michael, 74321 Bietigheim-Bissingen (DE); Geskes, Peter, 73760 Ostfildern (DE); Pantow, Eberhard, 71364 Winnenden (DE)
(74) Vertreter: Grauel, Andreas

(56) Entgegenhaltungen:
- DE-A1-102007 035 443
- DE-A1-102009 012 493
- US-A- 2 947 522
- US-A- 3 439 738
- US-A- 4 870 816
- US-A1- 2008 022 684

## Beschreibung

Die Erfindung betrifft einen Wärmeübertrager gemäß dem Oberbegriff des Anspruches 1, ein System zur Nutzung von Abwärme eines Verbrennungsmotors mittels des Clausius-Rankine-Kreisprozesses gemäß dem Oberbegriff des Anspruches 8 und einen Verbrennungsmotor mit einem System zur Nutzung von Abwärme des Verbrennungsmotors mittels des Clausius-Rankine-Kreisprozesses gemäß dem Oberbegriff des Anspruches 9.

Verbrennungsmotoren werden in verschiedenen technischen Anwendungen zur Umwandlung von Wärmeenergie in mechanische Energie eingesetzt. In Kraftfahrzeugen, insbesondere in Lastkraftwagen, werden Verbrennungsmotoren eingesetzt, um das Kraftfahrzeug fortzubewegen. Der Wirkungsgrad von Verbrennungsmotoren kann durch den Einsatz von Systemen zur Nutzung von Abwärme des Verbrennungsmotors mittels des Clausius-Rankine-Kreisprozesses erhöht werden. Das System wandelt dabei Abwärme des Verbrennungsmotors in mechanische Energie um. Das System umfasst einen Kreislauf mit Leitungen mit einem Arbeitsmedium, z. B. Wasser oder ein organisches Kältemittel wie R245fa, eine Pumpe zum Fördern des Arbeitsmediums, einen Verdampferwärmeübertrager zum Verdampfen des flüssigen Arbeitsmedium, eine Expansionsmaschine, einen Kondensator zum Verflüssigen des dampfförmigen Arbeitsmediums und einen Auffang- und Ausgleichsbehälter für das flüssige Arbeitsmedium. Durch den Einsatz derartiger Systeme in einem Verbrennungsmotor kann bei einem Verbrennungsmotor mit einem derartigen System als Bestandteil des Verbrennungsmotors der Gesamtwirkungsgrad des Verbrennungsmotors erhöht werden.

In dem Verdampferwärmeübertrager wird das Arbeitsmedium durch Abwärme des Verbrennungsmotors verdampft und anschließend wird das verdampfte Arbeitsmedium der Expansionsmaschine zugeleitet, in welcher das gasförmige Arbeitsmedium expandiert und mechanische Arbeit leistet mittels der Expansionsmaschine. In dem Verdampferwärmeübertrager wird beispielsweise durch einen ersten Strömungskanal das Arbeitsmedium und durch einen zweiten Abgasströmungskanal Abgas des Verbrennungsmotors geleitet. Dadurch wird die Wärme von dem Abgas mit einer Temperatur im Bereich zwischen 200° und 600°C auf das Arbeitsmedium in dem Verdampferwärmeübertrager übertragen und somit das Arbeitsmedium von dem flüssigen Aggregatzustand in den dampfförmigen Aggregatzustand überführt.

Als Arbeitsmedium bzw, Stoff für den Clausius-Rankine-Kreisprozess kommen viele Medien bzw. Stoffe in Betracht. Dabei haben einige dieser Stoffe, insbesondere Ethanol und organische Arbeitsmedien, (obere) Grenztemperaturen, oberhalb dessen sich diese zersetzen und zum Teil hochgiftige Stoffe entstehen können. Mit derartigen Zersetzungsprodukten kann der Clausius-Rankine-Kreisprozess nicht mehr fortbetrieben werden, so dass dadurch die Nutzung von Abwärme eines Verbrennungsmotors zur Erhöhung des Wirkungsgrades des Verbrennungsmotors nicht mehr möglich ist. Einige der Stoffe mit der oberen Grenztemperatur sind aus thermodynamischer Sicht, beispielsweise im Vergleich zu Wasser, zu bevorzugen, weil damit größere Wirkungsgrade erreicht werden können und andere Risiken, wie z. B. das Einfrieren von Wasser, zu vermeiden ist. Die oberen Grenztemperaturen liegen bei einigen Stoffen bzw. Arbeitsmedien bereits in Bereichen ab 300°C oder auch höher, z. B. in einem Temperaturbereich von 400° oder 500°C. Bei einem Betreiben des Clausius-Rankine-Kreisprozesses mit Abgas als Energiequelle, d. h. dass durch einen Verdampferwärmeübertrager Abgas des Verbrennungsmotors und das Arbeitsmedium geleitet wird zum Verdampfen des Arbeitsmediums im Verdampferwärmeübertrager, ist der Verdampferwärmeübertrager in einer Gegenstromführung ausgebildet. Dies bedeutet, dass bei der Gegenstromführung das Abgas in entgegengesetzter Richtung zu dem Arbeitsmedium durch den Verdampferwärmeübertrager geleitet wird. Dies ist erforderlich, um eine maximale Überhitzung und Erwärmung des Arbeitsmediums für einen möglichst hohen Wirkungsgrad des Clausius-Rankine-Kreisprozesses zu ermöglichen. Bei einer derartigen Gegenstromführung kann dies bedeuten, dass das Arbeitsmedium auf die Eintrittstemperatur des Abgases in den Verdampferwärmeübertrager erwärmt wird. Das Abgas hat dabei Eintrittstemperaturen im Bereich von ungefähr 350° bis 600°C bei einem Verdampferwärmeübertrager in einer Abgasrückführung, in seltenen Fällen sogar von ungefähr 700°C und die Temperatur des Abgases im Eintritt in den Verdampferwärmeübertrager liegt bei einem Verdampferwärmeübertrager in einem Abgasendrohr, z. B. nach einem Abgasturbolader vor dem Austritt in die Umgebung, im Bereich von 200° bis 400°C. Eine derartige starke Erwärmung des Arbeitsmediums in Bereiche der Eintrittstemperatur des Abgases kann jedoch im Widerspruch zur thermischen Beständigkeit des verwendeten Arbeitsmediums führen. Die Folge davon ist, dass eine Zersetzung des Arbeitsmediums, teilweise mit dem Entstehen von hochgiftigen Stoffen, die Folge ist und dadurch der Clausius-Rankine-Kreisprozess nicht mehr weiter betrieben werden kann aufgrund der Zersetzungsprodukte, die zu Schädigungen und Ablagerungen an einem System zur Nutzung von Abwärme eines Verbrennungsmotors mittels des Clausius-Rankine-Kreisprozesses führen.

Zwar besteht die Möglichkeit, durch eine geeignete Regelung der Massenströme an Abgas und an Arbeitsmedium die maximale Temperatur des Arbeitsmediums beim Austritt aus dem Verdampferwärmeübertrager unterhalb der Grenztemperatur zu halten, jedoch besteht die Gefahr, dass aufgrund von Inhomogenitäten im Verdampferwärmeübertrager lokal die oberen Grenztemperaturen trotzdem überschritten werden. Auch bei transienten Betriebszuständen besteht eine derartige Gefahr der Erwärmung des Arbeitsmediums oberhalb der Grenztemperatur.

Die WO 2009/089885 A1 zeigt eine Vorrichtung zum Austausch von Wärme zwischen einem ersten und einem zweiten Medium, mit in einer Stapelrichtung aufeinandergestapelten Scheibenpaaren, wobei zwischen den zwei Scheiben zumindest eines Scheibenpaares ein von einem ersten Medium durchströmbarer erster Strömungsraum und zwischen zwei zueinander benachbarten Scheibenpaaren ein von einem zweiten Medium durchströmbarer zweiter Strömungsraum ausgebildet ist, wobei der erste Strömungsraum einen ersten Strömungspfad mit einer nacheinander in entgegengesetzten Richtungen durchströmbaren Strömungspfadabschnitten für das erste Medium aufweist, welche durch eine zwischen den zumindest zwei Scheiben des zumindest einen Scheibenpaares angeordneter Trennwand voneinander getrennt sind.

Die DE 10 2009 022 865 A1 zeigt einen Rankine-Kreislauf, wobei im Rankine-Kreislauf eine Einlass- oder Einblasöffnung, über welche bei einem Stillstand ein anderes Medium in den Rankine-Kreislauf einleitbar ist, damit das Medium zumindest in einem Teilbereich des Rankine-Kreislaufes das Wasser ersetzt, und ein Sammelbehälter mit erhöhtem Speichervolumen und/oder ein zweiter Sammelbehälter vorgesehen ist, welcher das mit dem Medium ersetzte Wasser aufnimmt.

Aus der DE 10 2007 056 113 A1 ist ein Abgasrückgewinnungswärmetauscher bekannt. Dieser umfasst ein Gehäuse, einen Abgasströmungspfad, einen Arbeitsfluidströmungspfad, wobei der Arbeitsfluidströmungspfad einen ersten Teil, benachbart zum Arbeitsfluideinlass und einen zweiten Teil, beabstandet zum Arbeitsfluideinlass, aufweist. Eine Strömung des Arbeitsfluids entlang des ersten Teils des Arbeitsfluidströmungspfads liegt im Wesentlichen entgegen zu einer Strömung des Abgases entlang des Abgasströmungspfads, benachbart zum ersten Teil des Arbeitsfluidströmungspfads vor, um Wärme von der Strömung des Abgases, das sich entlang des Abgasströmungspfads bewegt, zu erhalten, wobei die Strömung des Arbeitsfluids entlang des zweiten Teils des Arbeitsfluidströmungspfads im Wesentlichen parallel zu der Strömung des Abgases entlang des Abgasströmungspfads, benachbart zum zweiten Teil des Arbeitsfluidströmungspfads, vorliegt.

Die DE 10 2007 035443 A1 beschreibt einen Wärmeübertrager zur Kühlung von rückgeführtem Abgas, der einen ersten und einen zweiten, jeweils von dem rückgeführten Abgas durchströmbaren Teil zur Kühlung des Abgases umfasst. Ein Regelglied ist vorgesehen, mittels dessen eine auf den Abgasstrom wirkende Kühlleistung des zweiten Teils einstellbar regelbar ist.

Der Wärmeübertrager der US 2008/022684 A1 weist ein erstes Teil und ein zweiteiliges zweites Teil auf. Das erste Fluid ist ein Abgas und das zweite Fluid ist Dampf.

Die Aufgabe der vorliegenden Erfindung besteht deshalb darin, einen Wärmeübertrager, ein System zur Nutzung von Abwärme eines Verbrennungsmotors mittels des Clausius-Rankine-Kreisprozesses und einen Verbrennungsmotor mit einem System zur Nutzung von Abwärme des Verbrennungsmotors mittels des Clausius-Rankine-Kreisprozesses zur Verfügung zu stellen, bei dem eine Überschreitung einer oberen Grenztemperatur des Arbeitsmediums in dem Verdampferwärmeübertrager vermieden wird.

Diese Aufgabe wird gelöst mit einem Wärmeübertrager, umfassend einen ersten Strömungsraum zum Durchleiten eines ersten Fluides, das ein Arbeitsmedium ist, einen zweiten Strömungsraum zum Durchleiten eines zweiten Fluides, das ein Abgas ist, so dass von dem zweiten Fluid auf das erste Fluid oder umgekehrt Wärme übertragbar ist, der erste Strömungsraum in einen ersten Teil und einen zweiten Teil unterteilt ist und eine erste Einlassöffnung für das erste Fluid in den ersten Teil mündet sowie der zweite Teil in Strömungsrichtung des ersten Fluides nach dem ersten Teil ausgebildet ist, die erste Einlassöffnung zum Einleiten des ersten Fluides, eine erste Auslassöffnung zum Ausleiten des ersten Fluides, eine zweite Einlassöffnung zum Einleiten des zweiten Fluides, eine zweite Auslassöffnung zum Ausleiten des zweiten Fluides, wobei der erste Teil in Strömungsrichtung des zweiten Fluides vor dem zweiten Teil ausgebildet ist, so dass das zweite Fluid zuerst durch den ersten Teil und anschließend durch den zweiten Teil leitbar ist.

In den ersten Teil des ersten Strömungsraumes tritt das noch nicht erwärmte Arbeitsmedium durch die erste Einlassöffnung in den Wärmeübertrager ein. Dieses noch nicht erwärmte erste Fluid, z. B. das Arbeitsmedium, befindet sich somit noch auf einer sehr niedrigen Temperatur und der erste Teil des ersten Strömungsraumes ist dahingehend ausgelegt, dass aufgrund der Wärmeübertragungsfläche eine Erwärmung des Arbeitsmediums oberhalb einer Grenztemperatur ausgeschlossen ist. Der erste Teil des ersten Strömungsraumes weist somit beispielsweise eine wesentlich kleinere Oberfläche auf zum Erwärmen des Arbeitsmediums als der zweite Teil. Durch das Erwärmen des Arbeitsmediums im ersten Teil wird das zweite Fluid, insbesondere das Abgas, abgekühlt und dabei dahingehend abgekühlt, dass die Temperatur des Abgases nach dem Austreten aus dem ersten Teil und dem anschließenden Einleiten in den zweiten Teil unterhalb der Grenztemperatur des Arbeitsmediums liegt beziehungsweise die Wandtemperatur auf der Medienseite im zweiten Teil unterhalb der Grenztemperatur liegt. Dadurch kann eine Erwärmung oder eine Überhitzung des Arbeitsmediums oberhalb der Grenztemperatur und einer damit verbundenen Zersetzung des Arbeitsmediums im Wärmeübertrager im Wesentlichen ausgeschlossen werden.

Das erste Fluid und das zweite Fluid sind in einer Gegenströmführung durch den zweiten Teil leitbar. Der Wärmeübertrager umfasst Ventile und Wärmeübertrager-Leitungen. In einer Verschaltung mit den Ventilen ist die erste Einlassöffnung für das erste Fluid anstelle an dem ersten Teil an dem zweiten Teil ausgebildet und die erste Auslassöffnung für das erste Fluid ist an dem ersten Teil ausgebildet. Der zweite Teil des ersten Strömungsraumes ist wesentlich größer als der erste Teil des ersten Strömungsraumes und der zweite Teil wird mit einer Gegenstromführung ausgeführt. Die Gegenstromführung ist zur Erwärmung des Arbeitsmediums wesentlich günstiger, so dass dadurch im zweiten Teil des ersten Strömungsraumes eine wesentlich bessere Erwärmung erreicht werden kann, jedoch ohne eine Erwärmung des Arbeitsmediums oberhalb der Grenztemperatur des Arbeitsmediums zu erreichen, weil das Abgas bereits unterhalb der Grenztemperatur in den zweiten Teil eingeleitet wird beziehungsweise die Wandtemperatur auf der Medienseite im zweiten Teil unterhalb der Grenztemperatur liegt. Damit kann der Wärmeübertrager überwiegend oder vollständig mit der wesentlich günstigeren Gegenstromführung ausgebildet sein, ohne dass eine Erwärmung des Arbeitsmediums oberhalb der Grenztemperatur die Folge ist.

in einer weiteren Ausgestaltung ist ein erster Eintrittsabschnitt des ersten Fluides in den zweiten Teil in Strömungsrichtung des zweiten Fluides in einem Abstand, z. B. wenigstens 50%, 70% oder 80% des Strömungsweges des zweiten Fluides in dem zweiten Teil, zu einem zweiten Eintrittsabschnitt des zweiten Fluides in dem zweiten Teil ausgebildet.

In einer ergänzenden Ausführungsform ist ein erster Eintrittsabschnitt des ersten Fluides in den zweiten Teil in Strömungsrichtung des zweiten Fluides im Bereich eines zweiten Austrittsabschnitt des zweiten Fluides, z. B. mit einem Abstand von weniger als 50%, 30% oder 20% des Strömungsweges des zweiten Fluides in dem zweiten Teil, in dem zweiten Teil ausgebildet und/oder der erste Teil und der zweite Teil sind bezüglich des ersten Fluides mit einer Wärmeübertrager-Leitung fluidleitend miteinander verbunden. Der erste Teil und der zweite Teil sind beispielsweise als zwei separate Baueinheiten ausgebildet, so dass das erste Fluid von dem ersten zu dem zweiten Teil mit der Wärmeübertrager-Leitung geleitet wird.

Vorzugsweise sind das erste Fluid und das zweite Fluid in einer Gegen- oder Gleichströmführung durch den ersten Teil leitbar.

In einer Variante ist der erste Teil und der zweite Teil des Wärmeübertragers von separaten Baueinheiten des Wärmeübertragers oder von nur einer Baueinheit des Wärmeübertragers gebildet.

Zweckmäßig ist der zweite Teil des Wärmeübertragers von separaten Baueinheiten des Wärmeübertragers oder von nur einer Baueinheit des Wärmeübertragers gebildet.

In einer weiteren Ausführungsform ist bzw. sind der Wärmeübertrager und/oder wenigstens eine Baueinheit des Wärmeübertragers in Scheibenbauweise und/oder in Rohrbündelbauweise und/oder in Plattenbauweise ausgebildet.

Zweckmäßig umfasst der Wärmeübertrager übereinander gestapelte Scheibenpaare, wobei zwischen den beiden Scheiben eines Scheibenpaares ein erster Strömungsraum durch Durchleiten des ersten Fluides ausgebildet ist und der zweite Strömungsraum zwischen zwei benachbarten Scheibenpaaren ausgebildet ist.

In einer zusätzlichen Variante sind zwischen den Scheibenpaaren an dem zweiten Strömungsraum Rippen, insbesondere Wellrippen, und/oder wenigstens ein Rohr angeordnet und/oder der erste Strömungsraum ist als ein, vorzugsweise mäanderförmiger, Strömungskanal ausgebildet.

In einer ergänzenden Ausführungsform sind die Komponenten des Wärmeübertragers, insbesondere die Scheiben, die Distanzstücke und/oder die Rippen, miteinander verlötet und/oder die Komponenten des Wärmeübertragers, insbesondere die Scheiben, die Distanzstücke und/oder die Rippen, bestehen wenigstens teilweise, insbesondere vollständig, aus Metall, insbesondere Edelstahl. Der Wärmeübertrager als Verdampferwärmeübertrager ist dabei hohen thermischen Beanspruchungen ausgesetzt und bei einem Durchleiten von Abgas durch den Verdampferwärmeübertrager auch hohen chemischen Beanspruchungen ausgesetzt, sodass für eine Langlebigkeit des Verdampferwärmeübertrags eine Ausbildung, insbesondere vollständige Ausbildung, des Verdampferwärmeübertragers aus Edelstahl erforderlich ist.

Erfindungsgemäßes System zur Nutzung von Abwärme eines Verbrennungsmotors mittels des Clausius-Rankine-Kreisprozesses, umfassend einen Kreislauf mit Leitungen mit einem Arbeitsmedium, insbesondere ein organisches Arbeitsmedium oder Ethanol, eine Pumpe zum Fördern des Arbeitsmediums, einen Verdampferwärmeübertrager zum Verdampfen des flüssigen Arbeitsmediums mit wenigstens einem ersten Strömungsraum zum Durchleiten des Arbeitsmediums und wenigstens einem zweiten Strömungsraum zum Durchleiten eines Fluides, z. B. Ladeluft oder Abgas, zur Übertragung von Wärme von dem Fluid auf das Arbeitsmedium, eine Expansionsmaschine, einen Kondensator zum Verflüssigen des dampfförmigen Arbeitsmediums, vorzugsweise einen Auffang- und Ausgleichsbehälter für das flüssige Arbeitsmedium, wobei der Verdampferwärmeübertrager als ein in dieser Schutzrechtsanmeldung beschriebener Wärmeübertrager ausgebildet ist.

In einer weiteren Ausgestaltung ist die Expansionsmaschine eine Turbine oder eine Hubkolbenmaschine.

Zweckmäßig weist der Wärmeübertrager eine Platten-Sandwichstruktur auf und/oder ist als ein Plattenwärmeübertrager ausgebildet.

In einer weiteren Ausgestaltung umfasst das System einen Rekuperator, mittels dem Wärme aus dem Arbeitsmedium nach dem Durchströmen der Expansionsmaschine an das Arbeitsmedium vor dem Verdampfer übertragbar ist.

In einer zusätzlichen Variante besteht der Verdampferwärmeübertrager wenigstens teilweise, insbesondere vollständig, aus Edelstahl, da das Arbeitsmedium mit einem hohen Druck, z. B. im Bereich zwischen 40 bis 80 bar, und das Abgas mit einer hohen Temperatur, z. B. im Bereich ca. 600°C, durch den Verdampferwärmeübertrager geleitet wird.

Eine erste und zweite Ein- und Auslassöffnung ist eine Öffnung zum Ein- und Ausleiten des ersten und zweiten Fluides in und aus dem Wärmeübertrager. Ein erster und zweiter Ein- und Austrittsabschnitt ist eine Öffnung zum Ein- und Ausleiten des ersten und zweiten Fluides von einer Baueinheit bzw. einem Teil zu einer anderen Baueinheit bzw. Teil.

Der erste und zweite Teil betrifft den ersten Strömungsraum und/oder den Wärmeübertrager.

Erfindungsgemäßer Verbrennungsmotor, insbesondere Hubkolbenverbrennungsmotor, mit einem System zur Nutzung von Abwärme des Verbrennungsmotors mittels des Clausius-Rankine-Kreisprozesses, das System umfassend einen Kreislauf mit Leitungen mit einem Arbeitsmedium, eine Pumpe zum Fördern des Arbeitsmediums, einen von der Abwärme des Verbrennungsmotors erwärmbaren Verdampfer zum Verdampfen des flüssigen Arbeitsmediums, eine Expansionsmaschine, einen Kondensator zum Verflüssigen des dampfförmigen Arbeitsmediums, vorzugsweise einen Auffang- und Ausgleichsbehälter für das flüssige Arbeitsmedium, wobei der Verdampferwärmeübertrager als ein in dieser Schutzrechtsanmeldung beschriebener Wärmeübertrager ausgebildet ist und/oder das durch den zweiten Strömungskanal geleitete Fluid Ladeluft ist, so dass der Verdampferwärmeübertrager ein Ladeluftkühler ist oder das Fluid Abgas ist, so dass der Verdampferwärmeübertrager vorzugsweise ein Abgasrückführkühler ist.

In einer weiteren Ausgestaltung ist von dem System als Bestandteil des Verbrennungsmotors die Abwärme des Abgashauptstromes des Verbrennungsmotors und/oder die Abwärme der Abgasrückführung und/oder die Abwärme der komprimierten Ladeluft und/oder die Wärme eines Kühlmittels des Verbrennungsmotors nutzbar. Von dem System wird somit die Abwärme des Verbrennungsmotors in mechanische Energie umgewandelt und dadurch der Wirkungsgrad des Verbrennungsmotors in vorteilhafter Weise erhöht.

In einer weiteren Ausgestaltung umfasst das System einen Generator. Der Generator ist von der Expansionsmaschine antreibbar, so dass das System damit elektrische Energie oder elektrischen Strom zur Verfügung stellen kann.

In einer weiteren Ausgestaltung wird als Arbeitsmedium des Systems Wasser als Reinstoff, R245fa, Ethanol (Reinstoff oder Gemisch von Ethanol mit Wasser), Methanol (Reinstoff oder Gemisch von Methanol und Wasser) längerkettige Alkohole C5 bis C10, längerkettige Kohlenwasserstoffe C5 (Pentan) bis C8 (Oktan), Pyridin (Reinstoff oder Gemisch von Pyridin mit Wasser), Methylpyridin (Reinstoff oder Gemisch von Methylpyridin mit Wasser), Trifluorethanol (Reinstoff oder Gemisch von Trifluorethanol mit Wasser), Hexafluorbenzol, eine Wasser/Ammoniaklösung und/oder ein Wasser-Ammoniak-Gemisch eingesetzt.

Im Nachfolgenden werden Ausführungsbeispiele der Erfindung unter Bezugnahme auf die beigefügten Zeichnungen näher beschrieben. Es zeigt:
- Fig. 1: eine stark vereinfachte Darstellung eines Verbrennungsmotors mit einem System zur Nutzung von Abwärme des Verbrennungsmotors,
- Fig. 2: eine Ansicht einer Baueinheit eines Verdampferwärmeübertragers,
- Fig. 3: eine Draufsicht einer Scheibe der Baueinheit gemäß Fig. 2 des Verdampferwärmeübertragers,
- Fig. 4: eine perspektivische Ansicht der Baueinheit gemäß Fig. 2 des Verdampferwärmeübertragers,
- Fig. 5: ein erstes Ausführungsbeispiel des Wärmeübertragers,
- Fig. 6: ein zweites Ausführungsbeispiel des Wärmeübertragers,
- Fig. 7: ein drittes Ausführungsbeispiel des Wärmeübertragers,
- Fig. 8: ein erfindungsgemäßes Ausführungsbeispiel des Wärmeübertragers in einer ersten Verschaltung,
- Fig. 9: ein erfindungsgemäßes Ausführungsbeispiel des Wärmeübertragers in einer zweiten Verschaltung.

Ein Verbrennungsmotor 8 als Hubkolbenverbrennungsmotor 9 dient zum Antrieb eines Kraftfahrzeuges, insbesondere Lastkraftwagens, und umfasst ein System 1 zur Nutzung von Abwärme des Verbrennungsmotors 8 mittels des Clausius-Rankine-Kreisprozesses. Der Verbrennungsmotor 8 weist einen Abgasturbolader 17 auf. Der Abgasturbolader 17 verdichtet Frischluft 16 in eine Ladeluftleitung 13 und ein in die Ladeluftleitung 13 eingebauter Ladeluftkühler 14 kühlt die Ladeluft vor der Zuführung zu dem Verbrennungsmotor 8 ab. Durch eine Abgasleitung 10 wird ein Teil des Abgases vom Verbrennungsmotor 8 abgeleitet und anschließend in einem Verdampferwärmeübertrager 4 bzw. Wärmeübertrager 12 als Abgasrückführkühler abgekühlt sowie mit einer Abgasrückführleitung 15 der dem Verbrennungsmotor 8 mit der Ladeluftleitung 13 zugeführten Frischluft beigemischt. Ein anderer Teil des Abgases wird in den Abgasturbolader 17 eingeleitet, um den Abgasturbolader 17 anzutreiben und anschließend als Abgas 18 an die Umgebung abgegeben. Zusätzlich kann mit einem zweiten Verdampferwärmeübertrager der andere Teil des Abgases vor dem Ausleiten in die Umgebung gekühlt und damit auch die Wärme in dem anderen Teil des Abgases genutzt werden (nicht dargestellt). Das System 1 weist Leitungen 2 mit einem Arbeitsmedium auf. In dem Kreislauf mit dem Arbeitsmedium ist eine Expansionsmaschine 5, ein Kondensator 6, ein Auffang- und Ausgleichsbehälter 7 sowie eine Pumpe 3 integriert. Von der Pumpe 3 wird das flüssige Arbeitsmedium auf ein höheres Druckniveau in dem Kreislauf angehoben und anschließend verdampft das flüssige Arbeitsmedium in dem Verdampferwärmeübertrager 4 und leistet anschließend in der Expansionsmaschine 5 mechanische Arbeit, indem das gasförmige Arbeitsmedium expandiert und darauffolgend einen geringen Druck aufweist, In dem Kondensator 6 wird das gasförmige Arbeitsmedium verflüssigt und anschließend wieder dem Auffang- und Ausgleichsbehälter 7 zugeführt.

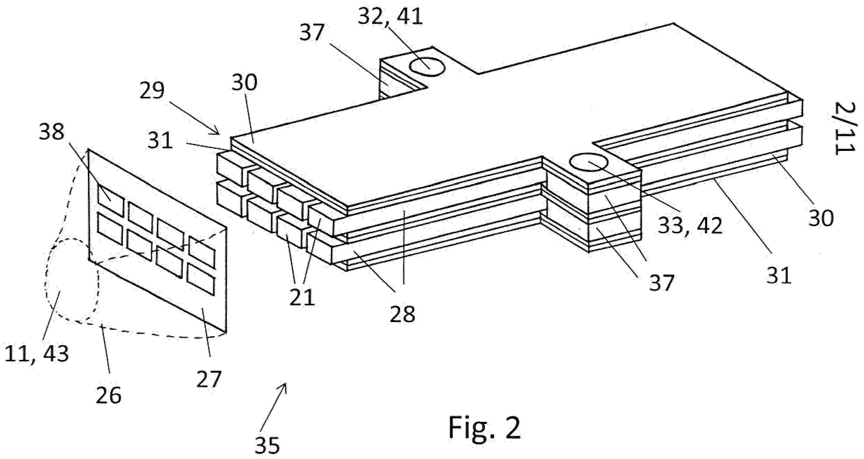

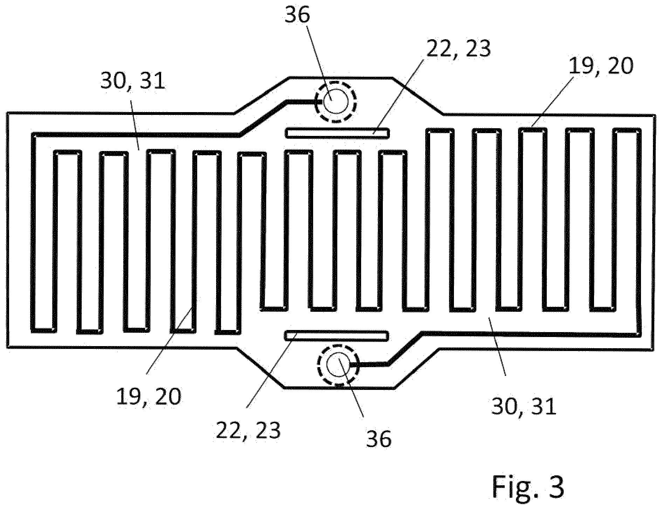

In Fig. 2 bis 4 ist ein Ausführungsbeispiel einer Baueinheit 35 des Verdampferwärmeübertragers 4 bzw. Wärmeübertragers 12 dargestellt. Die Baueinheit 35 weist eine erste Einlassöffnung 32 bzw. einen ersten Eintrittsabschnitt 41 zum Einleiten des Arbeitsmediums und eine erste Auslassöffnung 33 bzw. einen ersten Austrittsabschnitt 42 zum Ausleiten des Arbeitsmediums aus dem Verdampferwärmeübertrager 4 bzw. der Baueinheit 35 auf. Ein in Fig. 2 nicht dargestellter erster Strömungsraum 19 bildet sich zwischen einer Vielzahl von Scheibenpaaren 29 aus. Die Scheibenpaare 29 weisen jeweils eine obere Scheibe 30 und eine untere Scheibe 31 auf. Zwischen den Scheibenpaaren 29 sind jeweils Distanzstücke 37 angeordnet. Dabei ist in die untere Scheibe 31 ein mäanderförmiger Strömungskanal 20 als erster Strömungsraum 19 (Fig. 3) eingearbeitet, so dass sich zwischen der oberen und unteren Scheibe 30, 31 der mäanderförmige Strömungskanal 20 ausbildet, durch welchen das Arbeitsmedium von der Einlassöffnung 32 bzw. dem ersten Eintrittsabschnitt 41 zu der Auslassöffnung 33 bzw. dem ersten Austrittsabschnitt 42 geleitet wird. Die obere und untere Scheibe 30, 31 ist dabei mittels einer stoffschlüssigen Verbindung, nämlich einer Lötverbindung (nicht dargestellt), miteinander verbunden. Dabei weist die Baueinheit 35 des Verdampferwärmeübertragers 4 eine Vielzahl von übereinander angeordneten Scheibenpaaren 29 sowie dazwischen angeordneten Rohren 28 auf. Dies ist in Fig. 2 und 3 nur teilweise dargestellt.

Die obere und untere Scheibe 30, 31 weist ferner eine Durchlassöffnung 36 jeweils an der ersten Ein- und Auslassöffnung 32, 33 bzw. dem ersten Ein- und Austrittsabschnitt 41, 42 auf (eine Einlass-Durchlassöffnung 36 an der ersten Einlassöffnung 32 und eine Auslass-Durchlassöffnung 36 an der ersten Auslassöffnung 33) und an den Durchlassöffnungen 36 liegen zwischen den Scheibenpaaren 29 die Distanzstücke 37 mit Durchlassöffnungen 36 (Fig. 2), so dass dadurch das Arbeitsmedium auch durch die Scheibenpaare 29 zu darunter oder darüber liegenden Scheibenpaaren 29 an den Distanzstücken 37 strömen kann. Auch die Distanzstücke 37 weisen somit jeweils die Durchlassöffnung 36 auf. Zwischen den Scheibenpaaren 29 sind vier im Querschnitt rechteckförmige Rohre 28 angeordnet. Die im Querschnitt rechteckförmigen Rohre 28 bilden einen zweiten Strömungsraum 21 zum Durchleiten von Abgas oder Ladeluft, damit von dem Abgas oder der Ladeluft Wärme auf das Arbeitsmedium übertragen wird und dadurch das Arbeitsmedium in dem Verdampferwärmeübertrager 4 verdampft.

Ein Boden 27 (Fig. 2) weist im Querschnitt rechteckförmige Diffusoröffnungen 38 auf. Der Boden 27 ist an den Diffusoröffnungen 38 mit den Rohren 28 stoffschlüssig verbunden, d. h. ist an diese angelötet. An dem Boden 27 ist ein in Fig. 2 nur strichliert dargestellter Gasdiffusor 26 angeordnet, welcher eine zweite Einlassöffnung 11 bzw. einen zweiten Eintrittsabschnitt 43 zum Einleiten des Abgases oder der Ladeluft aufweist. In Fig. 2 ist der Boden 27 als Explosionsdarstellung noch nicht an den Rohren 28 befestigt.

Die Komponenten des Verdampferwärmeübertragers 4, z. B. die Scheibenpaare 29, der Gasdiffusor 26 oder das Distanzstück 37, bestehen aus Edelstahl oder Aluminium und sind mit einer stoffschlüssigen Verbindung, insbesondere einer Lötverbindung oder einer Klebeverbindung, miteinander verbunden.

In Fig. 3 ist eine Ansicht der Scheibe 30, 31 der Baueinheit 35 des Verdampferwärmeübertragers 4 dargestellt. Die obere und untere Scheibe 30, 31 weist zwei Durchlassöffnungen 36 zum Durchleiten des Arbeitsmediums auf. Dabei ist in die untere Scheibe 31 der Strömungskanal 20 als erster Strömungsraum 19 eingearbeitet, welcher die beiden Durchlassöffnungen 36 miteinander verbindet. Dadurch kann das Arbeitsmedium von der oberen (Einlass-)Durchlassöffnung 36 durch den Strömungskanal 20 zu der unteren (Auslass-)Durchlassöffnung 36 gemäß Fig. 3 strömen. Zwischen zwei Scheibenpaaren (Fig. 2) sind jeweils an den Durchlassöffnungen 36 Distanzstücke 37 mit Durchlassöffnungen 36 angeordnet. Dehnungsöffnungen 22 als Dehnungsschlitze 23 verhindern Temperaturspannungen.

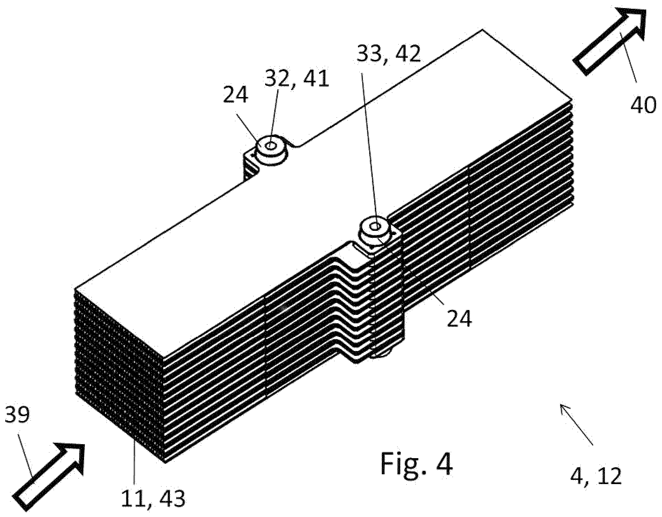

In Fig. 4 ist eine perspektivische Ansicht des Verdampferwärmeübertragers 4 als Wärmeübertrager 12 dargestellt. An den beiden Durchlassöffnungen 36 der obersten Scheibe 30 ist jeweils eine Buchse 24 angeordnet. An der Buchse 24 ist eine Einlassöffnung 32 bzw. ein erster Eintrittsabschnitt 41 für das Arbeitsmedium und eine erste Auslassöffnung 33 bzw. ein erster Austrittsabschnitt 42 für das Arbeitsmedium vorhanden. Das Abgas wird durch den zweiten Strömungsraum 21 geleitet, welcher zwischen den Scheibenpaaren 29 auftritt. Somit wird das Abgas durch einen Eintritt 39 eingeleitet und durch einen Austritt 40 aus der Baueinheit 35 des Wärmeübertragers 12 abgeleitet. Vorzugsweise sind mehrere Baueinheiten 35 und/oder der Verdampferwärmeübertrager 4 von einem nicht dargestellten Gehäuse eingeschlossen, so dass das Abgas 18 von einer Baueinheit 35 zu einer anderen Baueinheit 35 geführt ist.

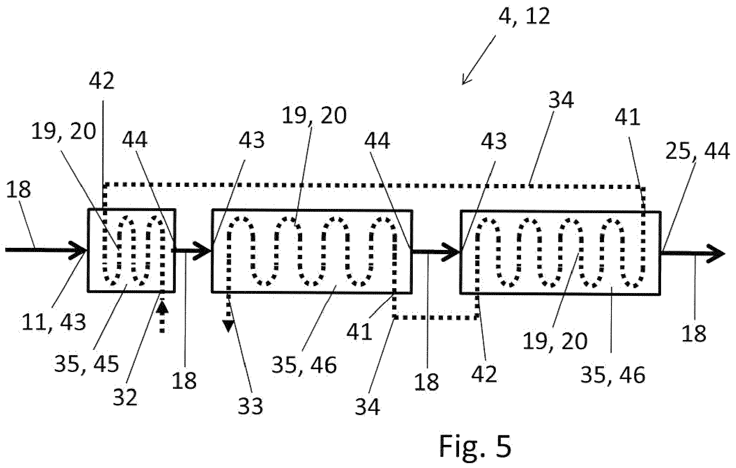

In Fig. 5 ist ein erstes Ausführungsbeispiel des Wärmeübertragers 12 als Verdampferwärmeübertrager 4 dargestellt. Der Verdampferwärmeübertrager 4 besteht aus drei Baueinheiten 35. Die Baueinheiten 35 sind in den obigen Fig. 2 bis 4 dargestellt. In Fig. 5 sind diese Baueinheiten 35 nur sehr vereinfacht dargestellt. Die drei Baueinheiten 35 werden von links nach rechts nacheinander von Abgas 18 durchströmt. Dabei bildet die erste von Abgas durchströmte Baueinheit 35 einen ersten Teil 45 des ersten Strömungsraumes 19 zum Durchleiten des Arbeitsmediums aus und zwei weitere, in Strömungsrichtung des Abgases 18 nachgeschaltete Baueinheiten 35 bilden den zweiten Teil 46 des ersten Strömungsraumes 19. Das Arbeitsmedium strömt durch die erste Einlassöffnung 32 in den ersten Teil 45 als Baueinheit 35 des Verdampferwärmeübertragers 4 ein. Aus dem ersten Austrittsabschnitt 42 des ersten Fluides, z. B. wenigstens eine Öffnung zum Ausleiten des Arbeitsmediums aus dem ersten Teil 45, strömt das Arbeitsmedium durch eine Wärmeübertrager-Leitung 34 zu einem ersten Eintrittsabschnitt 41 des ersten Fluides an dem zweiten Teil 46, nämlich an der in Fig. 5 äußerst rechts dargestellten Baueinheit 35. Der zweite Teil 46 besteht aus zwei Baueinheiten 35 und nach dem Durchleiten des Arbeitsmediums durch die in Fig. 5 rechts dargestellte Baueinheit 35 des zweiten
Teils 46 strömt das Arbeitsmedium durch den ersten Austrittsabschnitt 42 aus, durch die Wärmeübertrager-Leitung 34 und durch den ersten Eintrittsabschnitt 41 zu der linken Baueinheit 35 des zweiten Teils 46 des ersten Strömungsraumes 19. Aus der in Fig. 5 dargestellten linken Baueinheit 35 des zweiten Teils 46 des ersten Strömungsraumes 19 strömt das Arbeitsmedium aus der ersten Auslassöffnung 33 des Verdampferwärmeübertragers 4 wieder aus dem Verdampferwärmeübertrager 4 aus. Sowohl im ersten Teil 45, der nur aus einer Baueinheit 35 besteht, als auch im zweiten Teil 46, der aus zwei Baueinheiten 35 besteht, erfolgt eine Gegenstromführung des Abgases 18 und des Arbeitsmediums. Das Abgas 18 wird somit gemäß der Darstellung in Fig. 5 in einer Strömungsrichtung von links nach rechts durch die drei Baueinheiten 35 geleitet und das Arbeitsmedium wird gemäß der Darstellung in Fig. 5 durch die drei Baueinheiten 35 in einer Strömungsrichtung von rechts nach links durch die drei Baueinheiten 35 geleitet.

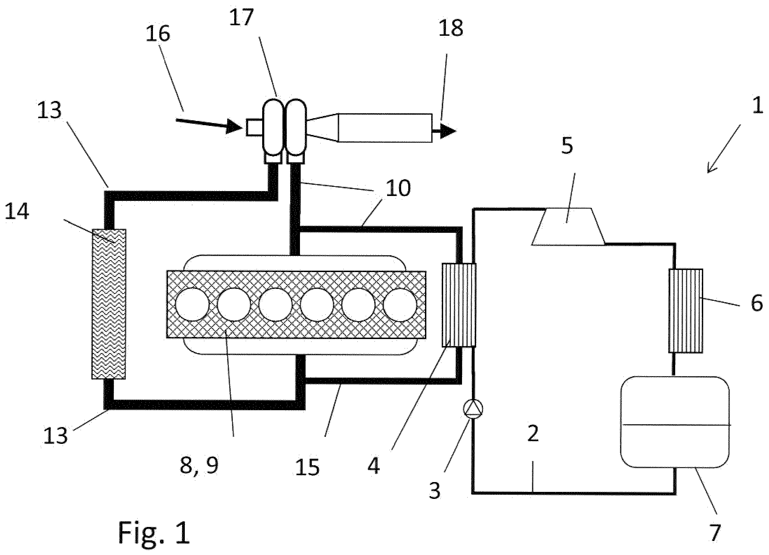

Der erste Teil 45 des ersten Strömungsraumes 19 bzw. die Baueinheit 35 des ersten Teils 45 ist wesentlich kleiner als der Strömungsraum am zweiten Teil 46 bzw. die beiden Baueinheiten 35 des zweiten Teils 46. Das Abgas strömt mit einer Eintrittstemperatur von ca. 600°C in die zweite Einlassöffnung 11 des Abgases 18 in die Baueinheit 35 des ersten Teils 45 ein und strömt anschließend an dem zweiten Austrittsabschnitt 44 aus dem ersten Teil 45 aus und durch einen zweiten Eintrittsabschnitt 43 an der linken Baueinheit 35 des zweiten Teils 46 in die linke Baueinheit 35 des zweiten Teils 46 ein und anschließend analog in die rechte Baueinheit 35 des zweiten Teils 46 und anschließend aus der rechten Baueinheit 35 am zweiten Teil 46 an der zweiten Auslassöffnung 25 des Verdampferwärmeübertragers 4 wieder aus dem Verdampferwärmeübertrager 4 aus. Dabei wird das Abgas in dem ersten Teil 45 unterhalb der Grenztemperatur des Arbeitsmediums von 300°C abgekühlt. Das Arbeitsmedium strömt an der ersten Einlassöffnung 32 stark abgekühlt mit einer Temperatur zwischen 50° und 90° C in flüssiger Form aus dem Auffang- und Ausgleichsbehälter 7 (Fig. 1) in den Verdampferwärmeübertrager 4 ein und wird aufgrund der Geometrie bzw. der zur Wärmeübertragung zur Verfügung stehenden Oberflächen nur geringfügig dahingehend erwärmt, dass das Arbeitsmedium aus dem ersten Austrittsabschnitt 42 der Baueinheit 35 am ersten Teil 45 unterhalb der Grenztemperatur des Arbeitsmediums, z. B. bei einer Temperatur von 200°C, aus dem ersten Teil 45 ausströmt. Das Abgas 18 strömt unterhalb der Grenztemperatur des Arbeitsmediums in den zweiten Teil 46 ein. Im zweiten Teil 46 wird das Abgas 18 weiter abgekühlt und das Arbeitsmedium weiter erwärmt. Dabei kann im zweiten Teil 46 das Arbeitsmedium nicht oberhalb der Grenztemperatur des Arbeitsmediums, z. B. Ethanol oder eine organische Verbindung, erwärmt werden, weil das Abgas 18 in den zweiten Teil 46 mit einer Temperatur an dem zweiten Eintrittsabschnitt 43 der linken Baueinheit 35 des zweiten Teils 46 unterhalb der Grenztemperatur des Arbeitsmediums in den zweiten Teil 46 einströmt.

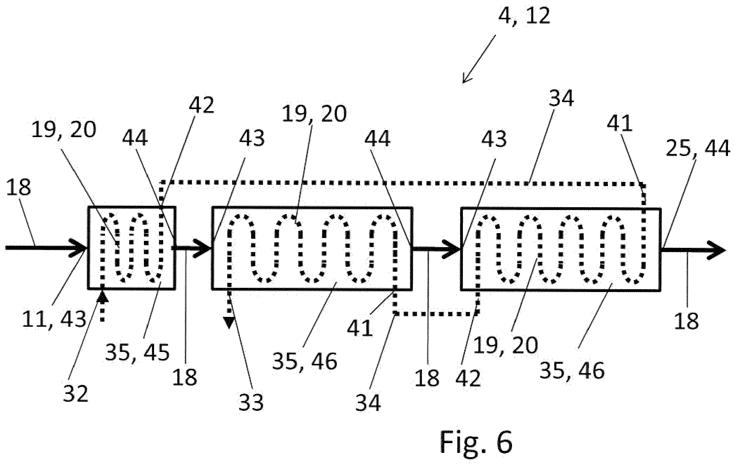

In Fig. 6 ist ein zweites Ausführungsbeispiel des Verdampferwärmeübertragers 4 dargestellt. Im Nachfolgenden werden im Wesentlichen nur die Unterschiede zu dem ersten Ausführungsbeispiel gemäß Fig. 5 beschrieben. Der erste Teil 45 des ersten Strömungsraumes 19 ist nicht in einer Gegenströmführung, sondern in einer Gleichstromführung von dem Abgas 18 und dem Arbeitsmedium durchströmt. Eine derartige Gleichstromführung am ersten Teil 45 ist bezüglich der Erwärmung des Abgases am ersten Teil etwas günstiger, weil aufgrund der Gleichstromführung an der kritischen zweiten Einlassöffnung 11 mit der maximalen Temperatur des Abgases 18 auf das Arbeitsmedium mit der minimalen Temperatur, d. h. der Eintrittstemperatur des Arbeitsmediums an der ersten Einlassöffnung 32, zusammentrifft, so dass das Arbeitsmedium im ersten Teil 45 maximal nicht so stark erwärmt wird.

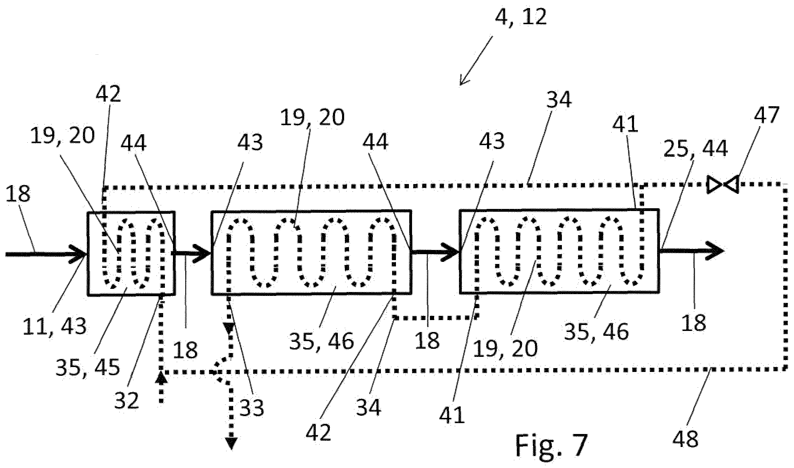

In Fig. 7 ist ein drittes Ausführungsbeispiel des Verdampferwärmeübertragers 4 dargestellt. Durch ein Ventil 47 und eine Bypass-Wärmeübertrager-Leitung 48 kann von der Wärmeübertrager-Leitung 34 von dem ersten Teil 45 zu dem zweiten Teil 46 das Arbeitsmedium ohne ein Durchleiten durch den zweiten Teil 46 teilweise wieder in einem fluidmäßigen Kurzschluss dem ersten Teil 45, d. h. der ersten Einlassöffnung 32 für das Arbeitsmedium, zugeführt werden. In Betriebszuständen des Verbrennungsmotors 8 mit einer niedrigen Abgastemperatur, z. B. während einer Warmlaufphase des Verbrennungsmotors 8 oder einem Teillastbetrieb des Verbrennungsmotors 8, kann das Ventil 47 wenigstens teilweise geöffnet werden, so dass das aus dem ersten Teil 45 ausströmende Arbeitsmedium in einem ersten Mediumteil aufgeteilt ist, der durch den zweiten Teil 46 strömt und in einen zweiten Mediumteil aufgeteilt ist, der wieder ohne Durchleiten durch den zweiten Teil 46 dem ersten Teil 45 zugeführt wird.

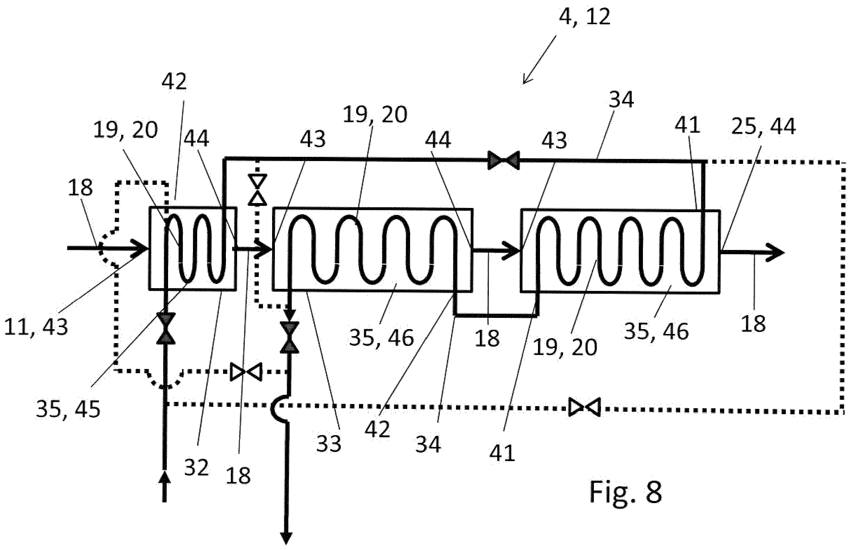

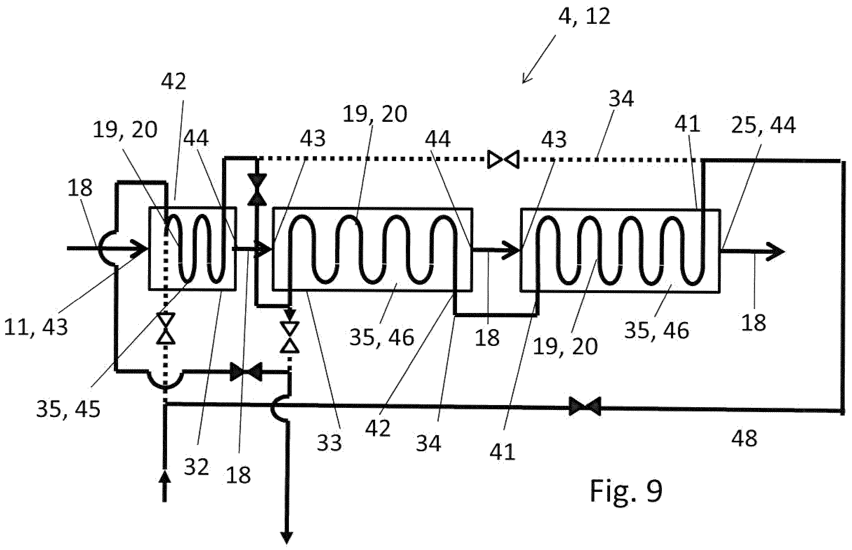

In Fig. 8 und 9 ist ein erfindungsgemäßes Ausführungsbeispiel des Wärmeübertragers 12 dargestellt. Im Nachfolgenden werden im Wesentlichen nur die Unterschiede zu dem zweiten Ausführungsbeispiel gemäß Fig. 6 beschrieben. Der Verdampferwärmeübertrager 4 umfasst mehrere Ventile 47. In der Fig. 8 dargestellten Schaltung der Ventile 47 strömt das Arbeitsmedium wie im zweiten Ausführungsbeispiel gemäß Fig. 6 durch den ersten Teil 45 und den zweiten Teil 46, d. h. zuerst durch den ersten Teil 45 und anschließend durch den zweiten Teil 46. Diese in Fig. 8 dargestellte Verschaltung wird bei hohen Abgastemperaturen gewählt, um eine Überhitzung des Arbeitsmediums oberhalb der Grenztemperatur zu vermeiden. Dabei strömt in dieser Verschaltung gemäß Fig. 8 das Arbeitsmedium nur durch die mit durchgezogenen Linien gezeichneten Wärmeübertrager-Leitungen 34 und die in den Wärmeübertrager-Leitungen 34 mit den durchgezogenen Linien angeordneten Ventile 47 sind geöffnet. Die Ventile 47 in den mit strichlierten Linien dargestellten Wärmeübertrager-Leitungen 34 sind geschlossenen und durch die Wärmeübertrager-Leitungen 34 in strichlierten Linien strömt kein Arbeitsmedium. Dies gilt analog auch für die in Fig. 9 dargestellte Verschaltung. In der in Fig. 9 dargestellten Verschaltung strömt das Arbeitsmedium zuerst durch
den zweiten Teil 46 und anschließend durch den ersten Teil 45. Diese Verschaltung gemäß Fig. 9 wird bei unkritischen Eintrittstemperaturen des Abgases 18 an der zweiten Einlassöffnung 11 genutzt. Aufgrund der niedrigen Abgastemperatur, z. B. bei einer Nutzung des Verbrennungsmotors 8 im Teillastbetrieb, kann der Verdampferwärmeübertrager 4 im reinen Gegenstrom mit der ersten Einlassöffnung 32 am zweiten Teil 46 und der ersten Auslassöffnung 33 am ersten Teil 45 betrieben werden, weil keine Überhitzung des Arbeitsmediums oberhalb der Grenztemperatur droht und der Betrieb im reinen Gegenstrom ermöglicht die maximale Erwärmung des Arbeitsmediums im Wärmeübertrager 12.

Insgesamt betrachtet sind mit dem erfindungsgemäßen Wärmeübertrager 12 und dem erfindungsgemäßen System 1 wesentliche Vorteile verbunden. Aufgrund der Aufteilung des ersten Strömungsraumes 19 mit dem Arbeitsmedium in einem ersten Teil 45 und einem zweiten Teil 46 kann eine Überhitzung des Arbeitsmediums oberhalb der Grenztemperatur des Arbeitsmediums, z. B. von 300°C, aufgrund der fluidleitenden Anordnung vermieden werden, so dass dadurch eine Zersetzung des Arbeitsmediums in dem Wärmeübertrager 12 im Wesentlichen vermieden werden kann. Auch Inhomogenitäten am Wärmeübertrager 12, die zu lokal höheren Grenztemperaturen des Arbeitsmediums führen können, führen nicht zu einer Zersetzung des Arbeitsmediums. Auch bei einer regelungstechnischen Lösung zur Vermeidung einer Erhitzung des Arbeitsmediums aufgrund der Volumenströme an Abgas und Arbeitsmedium kann trotz einer derartigen aufwendigen Regelung eine lokale Überhitzung des Arbeitsmediums aufgrund von Inhomogenitäten am Wärmeübertrager 12 nicht verhindert werden. Dies ist beim erfindungsgemäßen Wärmeübertrager 12 und dem erfindungsgemäßen System 1 nicht der Fall, weil hier aufgrund der fluidleitenden Anordnungen des ersten und zweiten Strömungsraumes 19, 21 eine lokale Überhitzung vermieden werden kann.

Erfindungsgemäß kann der Wärmeübertrager mit seinen verschiedenen Teilen an unterschiedliche vorherrschende Randbedingungen angepasst vorstellen. Dabei kann in dem ersten oder in dem zweiten Strömungsraum eine Rippe vorgesehen sein, die abhängig von den Randbedingungen wählbar ist. So kann eine Rippendichte der Rippe im Eingangsbereich des Strömungsraums unterschiedlich sein zum Ausgangsbereich oder zu einem mittleren Bereich. Vorteilhaft ist es, wenn im Gaseintrittsbereich die Rippendichte geringer ist als im Gasaustrittsbereich. Dies führt dazu, dass im heißen Gaseintrittsbereich die thermische Belastung reduziert wird, obwohl dies die Wärmeübertragung reduziert, wobei im Ausgangsbereich die Rippendichte erhöht wird um den Wärmeübergang zu optimieren und zu erhöhen.

Weiterhin kann sich auch die Bauform in unterschiedlichen Bereichen des Wärmeübertragers unterscheiden. Dabei kann in dem ersten oder in dem zweiten Strömungsraum eine andere Bauform des Wärmeübertragers vorgesehen sein. So kann im Eingangsbereich des Wärmeübertragers am Gaseintritt ein Wärmeübertragerblock als Rohrbündel-Wärmeübertrager gestaltet sein, der vorteilhaft ohne Rippen ausgestaltet ist. Dies bewirkt eine geringere thermische Leistung aber eine hohe thermische Festigkeit. Stromabwärts des Eingangs kann beispielsweise in einem mittleren Bereich oder am Gasaustritt eine Scheibenbauweise verwendet sein, die mit Rippen versehen ist, so dass eine hohe thermische Leistung erreicht wird, wobei dies aber mit einer geringeren Festigkeit einher geht, die aber bei den geringeren Temperaturen auch nicht benötigt wird.

### Bezugszeichenliste

- 1: System
- 2: Leitung
- 3: Pumpe
- 4: Verdampferwärmeübertrager
- 5: Expansionsmaschine
- 6: Kondensator
- 7: Auffang- und Ausgleichsbehälter
- 8: Verbrennungsmotor
- 9: Hubkolbenverbrennungsmotor
- 10: Abgasleitung
- 11: Zweite Einlassöffnung für das zweite Fluid, Abgas
- 12: Wärmeübertrager
- 13: Ladeluftleitung
- 14: Ladeluftkühler
- 15: Abgasrückführleitung
- 16: Frischluft
- 17: Abgasturbolader
- 18: Abgas
- 19: Erster Strömungsraum für Arbeitsmedium
- 20: Strömungskanal
- 21: Zweiter Strömungsraum für Abgas
- 22: Dehnungsöffnung
- 23: Dehnungsschlitz
- 24: Buchse
- 25: Zweite Auslassöffnung für das zweite Fluid, Abgas
- 26: Gasdiffusor
- 27: Boden
- 28: Rohr
- 29: Scheibenpaar
- 30: Obere Scheibe
- 31: Untere Scheibe
- 32: Erste Einlassöffnung für das erste Fluid, Arbeitsmedium
- 33: Erste Auslassöffnung für das erste Fluid, Arbeitsmedium
- 34: Wärmeübertrager-Leitung
- 35: Baueinheit
- 36: Durchlassöffnung
- 37: Distanzstück
- 38: Diffusoröffnung
- 39: Eintritt Abgas
- 40: Austritt Abgas
- 41: Erster Eintrittsabschnitt für das erste Fluid, Arbeitsmedium
- 42: Erster Austrittsabschnitt für das erste Fluid, Arbeitsmedium
- 43: Zweiter Eintrittsabschnitt für das zweite Fluid, Abgas
- 44: Zweiter Austrittsabschnitt für das zweite Fluid, Abgas
- 45: Erster Teil
- 46: Zweiter Teil
- 47: Ventil
- 48: Bypass-Wärmeübertrager-Leitung

## Patentansprüche

1. Wärmeübertrager (4, 12), umfassend
- einen ersten Strömungsraum (19) zum Durchleiten eines ersten Fluides, das ein Arbeitsmedium ist,
- einen zweiten Strömungsraum (21) zum Durchleiten eines zweiten Fluides, das Abgas (18) ist, so dass von dem zweiten Fluid auf das erste Fluid oder umgekehrt Wärme übertragbar ist,
- der erste Strömungsraum (19) in einen ersten Teil (45) und einen zweiten Teil (46) unterteilt ist und eine erste Einlassöffnung (32) für das erste Fluid in den ersten Teil (45) mündet sowie der zweite Teil (46) in Strömungsrichtung des ersten Fluides nach dem ersten Teil (45) ausgebildet ist,
- die erste Einlassöffnung (32) zum Einleiten des ersten Fluides,
- eine erste Auslassöffnung (33) zum Ausleiten des ersten Fluides,
- eine zweite Einlassöffnung (11) zum Einleiten des zweiten Fluides,
- eine zweite Auslassöffnung (25) zum Ausleiten des zweiten Fluides,
**dadurch gekennzeichnet, dass**
der erste Teil (45) in Strömungsrichtung des zweiten Fluides vor dem zweiten Teil (46) ausgebildet ist, so dass das zweite Fluid zuerst durch den ersten Teil (45) und anschließend durch den zweiten Teil (46) eitbar ist, wobei das erste Fluid und das zweite Fluid in einer Gegenstromführung zumindest durch den zweiten Teil (46) leitbar sind, wobei der Wärmeübertrager Ventile (47) und Wärmeübertrager-Leitungen (34) umfasst und in einer Verschaltung mit den Ventilen (47) die erste Einlassöffnung (32) für das erste Fluid anstelle an dem ersten Teil (45) an dem zweiten Teil (46) ausgebildet ist und die erste Auslassöffnung (33) für das erste Fluid an dem ersten Teil (45) ausgebildet ist.

2. Wärmeübertrager nach Anspruch 1, **dadurch gekennzeichnet, dass** ein erster Eintrittsabschnitt (41) des ersten Fluides in den zweiten Teil (46) in Strömungsrichtung des zweiten Fluides in einem Abstand, z. B. wenigstens 50%, 70% oder 80% des Strömungsweges des zweiten Fluides in dem zweiten Teil (46), zu einem zweiten Eintrittsabschnitt (43) des zweiten Fluides in dem zweiten Teil (46) ausgebildet ist.

3. Wärmeübertrager nach einem oder mehreren der vorhergehenden Ansprüche, **dadurch gekennzeichnet, dass** ein erster Eintrittsabschnitt (41) des ersten Fluides in den zweiten Teil (46) in Strömungsrichtung des zweiten Fluides im Bereich eines zweiten Austrittsabschnitts (44) des zweiten Fluides, z. B. mit einem Abstand von weniger als 50%, 30% oder 20% des Strömungsweges des zweiten Fluides in dem zweiten Teil (46) ausgebildet ist und/oder der erste Teil (45) und der zweite Teil (46) bezüglich des ersten Fluides mit einer Wärmeübertrager-Leitung (34) fluidleitend miteinander verbunden sind.

4. Wärmeübertrager nach einem oder mehreren der vorhergehenden Ansprüche, **dadurch gekennzeichnet, dass** das erste Fluid und das zweite Fluid in einer Gegen- oder Gleichströmführung durch den ersten Teil (45) leitbar sind.

5. Wärmeübertrager nach einem oder mehreren der vorhergehenden Ansprüche, **dadurch gekennzeichnet, dass** der erste Teil (45) und der zweite Teil (46) des Wärmeübertragers (4, 12) von nur einer Baueinheit (35) des Wärmeübertragers (4, 12) gebildet ist.

6. Wärmeübertrager nach einem oder mehreren der vorhergehenden Ansprüche, **dadurch gekennzeichnet, dass** der zweite Teil (46) des Wärmeübertragers (4, 12) von nur einer Baueinheit (35) des Wärmeübertragers (4, 12) gebildet ist.

7. Wärmeübertrager nach einem oder mehreren der vorhergehenden Ansprüche, **dadurch gekennzeichnet, dass** der Wärmeübertrager (4, 12) und/oder wenigstens eine Baueinheit (35) des Wärmeübertragers (4, 12) in Scheibenbauweise und/oder in Rohrbündelbauweise und/oder in Plattenbauweise ausgebildet ist bzw. sind.

8. System (1) zur Nutzung von Abwärme eines Verbrennungsmotors (8) mittels des Clausius-Rankine-Kreisprozesses, umfassend einen Kreislauf mit Leitungen (2) mit einem Arbeitsmedium, einer Pumpe (3) zum Fördern des Arbeitsmediums, einem Verdampferwärmeübertrager (4) zum Verdampfen des flüssigen Arbeitsmediums mit wenigstens einem ersten Strömungsraum (19) zum Durchleiten des Arbeitsmediums und wenigstens einem zweiten Strömungsraum (21) zum Durchleiten eines Fluides, z. B. Ladeluft oder Abgas, zur Übertragung von Wärme von dem Fluid auf das Arbeitsmedium, eine Expansionsmaschine (5), einen Kondensator (6) zum Verflüssigen des dampfförmigen Arbeitsmediums, vorzugsweise einen Auffang- und Ausgleichsbehälter (7) für das flüssige Arbeitsmedium,
**dadurch gekennzeichnet, dass**
der Verdampferwärmeübertrager (4) gemäß einem oder mehreren der vorhergehenden Ansprüche ausgebildet ist.

9. Verbrennungsmotor (8), insbesondere Hubkolbenverbrennungsmotor (9), mit einem System (1) zur Nutzung von Abwärme des Verbrennungsmotors (8) mittels des Clausius-Rankine-Kreisprozesses, das System (1) umfassend einen Kreislauf mit Leitungen (2) mit einem Arbeitsmedium, einer Pumpe (3) zum Fördern des Arbeitsmediums, einen, insbesondere von der Abwärme des Verbrennungsmotors (8) erwärmbaren, Verdampferwärmeübertrager (4) zum Verdampfen des flüssigen Arbeitsmediums, eine Expansionsmaschine (5), einen Kondensator (6) zum Verflüssigen des dampfförmigen Arbeitsmediums, vorzugsweise einen Auffang- und Ausgleichsbehälter (7) für das flüssige Arbeitsmedium,
**dadurch gekennzeichnet, dass**
der Verdampferwärmeübertrager gemäß einem oder mehreren der Ansprüche 1 bis 7 ausgebildet ist.

## Claims

1. A heat exchanger (4, 12), comprising
- a first flow space (19) for guiding a first fluid therethrough, the first fluid being a work fluid,
- a second flow space (21) for guiding a second fluid therethrough, the second fluid being exhaust gas (18), so that heat can be transferred from the second fluid to the first fluid or vice versa,
- wherein the first flow space (19) is divided into a first part (45) and a second part (46) and a first inlet opening (32) for the first fluid ends in the first part (45) and the second part (46) is designed after the first part (45) in the flow direction of the first fluid,
- the first inlet opening (32) for introducing the first fluid,
- a first outlet opening (33) for discharging the first fluid,
- a second inlet opening (11) for introducing the second fluid,
- a second outlet opening (25) for discharging the second fluid,
**characterised in that**
the first part (45) is designed forward of the second part (46) in the flow direction of the second fluid, so that the second fluid can be guided through the first part (45) first and then through the second part (46), wherein the first fluid and the second fluid can be guided at least through the second part (46) in a counter-current flow, wherein the heat exchanger comprises valves (47) and heat exchanger lines (34) and, when connected to the valves (47), the first inlet opening (32) for the first fluid is designed at the second part (46) instead of the first part (45) and the first outlet opening (33) for the first fluid is designed at the first part (45).

2. The heat exchanger according to claim 1, **characterised in that** a first inlet section (41) of the first fluid to the second part (46) is designed at a distance, e.g. at least 50%, 70% or 80% of the flow path of the second fluid in the second part (46), to a second inlet section (43) of the second fluid in the second part (46) in the flow direction of the second fluid.

3. The heat exchanger according to one or more of the preceding claims, **characterised in that** a first inlet section (41) of the first fluid to the second part (46) is designed in the region of a second outlet section (44) of the second fluid in the flow direction of the second fluid, e.g. with a distance of less than 50%, 30% or 20% of the flow path of the second fluid in the second part (46), and/or the first part (45) and the second part (46), with regard to the first fluid, are connected to one another in a fluid-conducting manner via a heat exchanger line (34) .

4. The heat exchanger according to one or more of the preceding claims, **characterised in that** the first fluid and the second fluid can be guided through the first part (45) in a counter-current flow or cocurrent flow.

5. The heat exchanger according to one or more of the preceding claims, **characterised in that** the first part (45) and the second part (46) of the heat exchanger (4, 12) are formed by only one component (35) of the heat exchanger (4, 12).

6. The heat exchanger according to one or more of the preceding claims, **characterised in that** the second part (46) of the heat exchanger (4, 12) is formed by only one component (35) of the heat exchanger (4, 12) .

7. The heat exchanger according to one or more of the preceding claims, **characterised in that** the heat exchanger (4, 12) and/or at least a component (35) of the heat exchanger (4, 12) is/are designed in a disc-type manner and/or in a tube bundle-type manner and/or in a plate-type manner.

8. A system (1) for using waste heat of an internal combustion engine (8) by means of the Clausius-Rankine loop process, comprising a loop with lines (2) with a work medium, a pump (3) for conveying the work medium, an evaporator heat exchanger (4) for evaporating the liquid work medium with at least one first flow space (19) for guiding the work medium therethrough and at least one second flow space (21) for guiding a fluid therethrough, e.g. charge air or exhaust gas, for transferring heat from the fluid to the work medium, an expansion machine (5), a condenser (6) for liquifying the vaporous work medium, preferably a collection and compensation container (7) for the liquid work medium,
**characterised in that**
the evaporator heat exchanger (4) is designed according to one or more of the preceding claims.

9. An internal combustion engine (8), in particular a reciprocating internal combustion engine (9), with a system (1) for using waste heat of the internal combustion engine (8) by means of the Clausius-Rankine loop process, wherein the system (1) comprises a loop with lines (2) with a work medium, a pump (3) for conveying the work medium, an evaporator heat exchanger (4), which can in particular be heated by the waste heat of the internal combustion engine (8), for evaporating the liquid work medium, an expansion machine (5), a condenser (6) for liquifying the vaporous work medium, preferably a collection and compensation container (7) for the liquid work medium,
**characterised in that**
the evaporator heat exchanger is designed according to one or more of claims 1 to 7.

## Revendications

1. Echangeur de chaleur (4, 12) comprenant :
- un premier espace d'écoulement (19) servant à la circulation d'un premier fluide qui est un milieu de travail,
- un second espace d'écoulement (21) servant à la circulation d'un second fluide qui est constitué par des gaz d'échappement (18), de sorte que de la chaleur peut être transférée du second fluide au premier fluide, et inversement,
- le premier espace d'écoulement (19) est subdivisé en une première partie (45) et en une seconde partie (46), et une première ouverture d'entrée (32) prévue pour le premier fluide débouche dans la première partie (45), tandis que la seconde partie (46) est formée, dans la direction d'écoulement du premier fluide, en aval de la première partie (45),
- la première ouverture d'entrée (32) servant à l'entrée du premier fluide,
- une première ouverture de sortie (33) servant à l'évacuation du premier fluide,
- une seconde ouverture d'entrée (11) servant à l'entrée du second fluide,
- une seconde ouverture de sortie (25) servant à l'évacuation du second fluide,
**caractérisé**
**en ce que** la première partie (45) est formée, dans la direction d'écoulement du second fluide, en amont de la seconde partie (46), de sorte que le second fluide peut être dirigé en passant d'abord par la première partie (45) et, ensuite, en passant par la seconde partie (46), où le premier fluide et le second fluide peuvent être dirigés en passant au moins par la seconde partie (46) suivant un guidage de flux circulant dans des directions opposées, où l'échangeur de chaleur comprend des soupapes (47) et des conduites d'échangeur de chaleur (34) et, dans un montage avec les soupapes (47), la première ouverture d'entrée (32) prévue pour le premier fluide est formée sur la seconde partie (46) à la place de la première partie (45), et la première ouverture de sortie (33) prévue pour le premier fluide est formée sur la première partie (45).

2. Echangeur de chaleur selon la revendication 1, **caractérisé en ce qu'**une première section d'entrée (41) du premier fluide entrant dans la seconde partie (46) est formée, dans la direction d'écoulement du second fluide, sur une distance, par exemple au moins de 50 %, de 70 % ou de 80 % égale à de celle du trajet d'écoulement du second fluide dans la seconde partie (46), par rapport à une seconde section d'entrée (43) du second fluide entrant dans la seconde partie (46).

3. Echangeur de chaleur selon une ou plusieurs des revendications précédentes, **caractérisé en ce qu'**une première section d'entrée (41) du premier fluide entrant dans la seconde partie (46) est formée, dans la direction d'écoulement du second fluide dans la zone d'une seconde section de sortie (44) du second fluide, par exemple en ayant une distance de moins de 50 %, de 30 % ou de 20 % égale à celle du trajet d'écoulement du second fluide dans la seconde partie (46) et / ou la première partie (45) et la seconde partie (46), concernant le premier fluide, sont reliées l'une à l'autre en étant conductrices de fluides par une conduite (34) de l'échangeur de chaleur.

4. Echangeur de chaleur selon l'une quelconque ou plusieurs des revendications précédentes, **caractérisé en ce que** le premier fluide et le second fluide peuvent être dirigés en passant par la première partie (45) suivant un guidage de flux circulant dans des directions opposées ou dans la même direction.

5. Echangeur de chaleur selon l'une quelconque ou plusieurs des revendications précédentes, **caractérisé en ce que** la première partie (45) et la seconde partie (46) de l'échangeur de chaleur (4, 12) sont formées seulement par un module (35) de l'échangeur de chaleur (4, 12).

6. Echangeur de chaleur selon l'une quelconque ou plusieurs des revendications précédentes, **caractérisé en ce que** la seconde partie (46) de l'échangeur de chaleur (4, 12) est formée seulement par un module (35) de l'échangeur de chaleur (4, 12).

7. Echangeur de chaleur selon l'une quelconque ou plusieurs des revendications précédentes, **caractérisé en ce que** l'échangeur de chaleur (4, 12) et / ou au moins un module (35) de l'échangeur de chaleur (4, 12) est ou sont configuré (s) en étant du type à plateaux et / ou du type à faisceaux de tubes et / ou du type à plaques.

8. Système (1) servant à la récupération de la chaleur dissipée par un moteur à combustion interne (8), au moyen du cycle de Clausius-Rankine, ledit système comprenant un circuit comportant des conduites (2) avec un milieu de travail, ledit circuit comportant une pompe (3) servant à fournir le milieu de travail, comportant un échangeur de chaleur d'évaporateur (4) servant à l'évaporation du milieu de travail liquide, ledit échangeur de chaleur d'évaporateur comprenant au moins un premier espace d'écoulement (19) servant à la circulation du milieu de travail et comprenant au moins un second espace d'écoulement (21) servant à la circulation d'un fluide, par exemple de l'air de suralimentation ou des gaz d'échappement, ledit second espace d'écoulement servant au transfert de chaleur du fluide, au milieu de travail, ledit circuit comportant une machine à expansion (5), un condenseur (6) servant à la liquéfaction du milieu de travail à l'état de vapeur, ledit circuit comportant de préférence un réservoir collecteur et un réservoir compensateur (7) pour le milieu de travail liquide,
**caractérisé**
**en ce que** l'échangeur de chaleur (4) de l'évaporateur est conçu selon l'une quelconque ou plusieurs des revendications précédentes.

9. Moteur à combustion interne (8), en particulier moteur à combustion interne à pistons alternatifs (9), comprenant un système (1) servant à la récupération de la chaleur dissipée par le moteur à combustion interne (8), au moyen du cycle de Clausius-Rankine, le système (1) comprenant un circuit comportant des conduites (2) avec un milieu de travail, ledit circuit comportant une pompe (3) servant à fournir le milieu de travail, comportant un échangeur de chaleur (4) de l'évaporateur servant à l'évaporation du milieu de travail liquide, ledit échangeur de chaleur de l'évaporateur pouvant être chauffé en particulier par la chaleur dissipée par le moteur à combustion interne (8), ledit circuit comportant une machine à expansion (5), un condenseur (6) servant à la liquéfaction du milieu de travail à l'état de vapeur, ledit circuit comportant de préférence un réservoir collecteur et un réservoir de compensation (7) pour le milieu de travail liquide,
**caractérisé**
**en ce que** l'échangeur de chaleur de l'évaporateur est conçu conformément à l'une quelconque ou plusieurs des revendications 1 à 7.
